# EUROPÄISCHE PATENTSCHRIFT

(11) **EP 1 699 968 B1**
(45) Veröffentlichungstag und Bekanntmachung des Hinweises auf die Patenterteilung: **23.04.2008**
(21) Anmeldenummer: 04804995.1
(22) Anmeldetag: 22.12.2004
(51) Int. Cl.: D06F 39/08, A47L 15/42

(54) **WASSERFUEHRENDES HAUSHALTSGER AET MIT EINER ANSCHLUSSVORRI CHTUNG FUER EINEN FRISCHWASSERSCHLAUCH**
WATER-GUIDING DOMESTIC APPLIANCE COMPRISING A CONNECTION DEVICE FOR A FRESH WATER PIPE
APPAREIL ELECTROMENAGER A PASSAGE D'EAU POURVU D'UN DISPOSITIF DE RACCORDEMENT POUR UN TUYAU D'ARRIVEE D'EAU

(30) Priorität: 23.12.2003 DE 10360903; 17.12.2004 DE 102004060948
(43) Veröffentlichungstag der Anmeldung: 13.09.2006
(73) Patentinhaber: BSH Bosch und Siemens Hausgeräte GmbH, 81739 München (DE)
(72) Erfinder: REHM, Karl-Heinz, 89561 Trugenhofen (DE); ROSENBAUER, Michael, 86756 Reimlingen (DE); STICKEL, Martin, 89537 Giengen (DE)
(86) Internationale Anmeldenummer: PCT/EP2004/053662
(87) Internationale Veröffentlichungsnummer: WO 2005/064068

(56) Entgegenhaltungen:
- DE-A1- 19 548 477
- DE-A1- 19 620 422
- DE-A1- 19 715 828
- DE-A1- 19 747 674
- GB-A- 992 447
- US-A- 3 021 868
- PATENT ABSTRACTS OF JAPAN Bd. 014, Nr. 350 (C-0744), 27. Juli 1990 (1990-07-27) -& JP 02 128793 A (TOSHIBA CORP; others: 01), 17. Mai 1990 (1990-05-17)

## Beschreibung

Die Erfindung betrifft eine Kombination umfassend ein wasserführendes Haushaltsgerät, insbesondere Geschirrspülmaschine oder Waschmaschine, und eine Anschlussvorrichtung zur 10 Aufnahme eines Zulaufschlauchs für die Zufuhr von Frischwasser in das wasserführende Haushaltsgerät.

Es ist bekannt, bei wasserführenden Haushaltsgeräten elektrisch ansteuerbare Magnetventile zur Regelung von Flüssigkeitsleitungen einzusetzen, wie z.B. ein Einlassventil im Zulaufschlauch zur Regelung der Zufuhr von Frischwasser aus der Hauswasserleitung in das wasserführende Haushaltsgerät. Dabei wird das Einlassventil üblicherweise von einer Betriebs- bzw. Programmsteuerung des wasserführenden Haushaltsgeräts über mechanische oder elektronische Steuerelemente einer Programmsteuerung gesteuert. Diese Einlassventile dienen außerdem dazu, bei einer Leckage im Haushaltsgerät die Wasserzufuhr durch Schließen der Ventile zu stoppen, um einen größeren Schaden zu vermeiden. Die Leckage wird z. B. in einer Geschirrspülmaschine durch einen Schwimmerschalter in der Bodenwanne und Füllstandssensoren im Spülbehälter registriert.

Bei den Sicherheitsanforderungen an wasserführende Haushaltsgeräte gibt es in verschiedenen Ländern unterschiedliche Vorschriften. In einigen Ländern soll auch der Zulaufschlauch zur Zufuhr von Frischwasser in das wasserführende Haushaltsgerät von der Leckageüberwachung mit erfasst sein, in anderen Ländern braucht der Zulaufschlauch nicht mit erfasst zu werden.

In Ländern, in denen der Zulaufschlauch mit überwacht werden muss, ist dieser vorzugsweise als Doppelschlauch mit einem zusätzlichen Hüllschlauch ausgebildet. Bei einer Undichtigkeit im Zulaufschlauch wird das austretende Wasser in die Bodenwanne der Geschirrspülmaschine mit dem Hüllschlauch geleitet, so dass der dort angeordnete Schwimmerschalter die Leckage registriert und an die Programmsteuerung meldet. Es kann auch ein Flüssigkeitssensor zwischen Zulaufschlauch und Hüllschlauch zur Erkennung einer Leckage eingebaut sein. Außerdem muss am installationsseitigen Ende des Zulaufschlauches, d. h. an der Verbindung zur Hauswasserinstallation, wenigstens ein Einlassventil angeordnet sein, das im Leckagefall schließt. Vorzugsweise werden aus Sicherheitsgründen häufig zwei Einlassventile verwendet, um beim Versagen eines Einlassventils trotzdem die Wasserzufuhr schließen zu können.

In Ländern, in denen der Zulaufschlauch nicht überwacht wird, benötigt man kein Einlassventil am installationsseitigen Ende des Zulaufschlauches.

Damit werden bei wasserführenden Haushaltsgeräten zwei unterschiedliche Arten von Zulaufschläuchen benötigt, d. h. nach der Endmontage liegen zwei Arten von wasserführenden Haushaltsgeräten vor, jeweils mit zwei unterschiedlichen Zulaufschläuchen. Das bedeutet eine hohe Fertigungstiefe und damit hohe Kosten.

Aus der DE 195 48 477 A1 ist eine Vorrichtung zum hydraulischen und elektrischen Anschluss einer Wassereinleitungseinrichtung an eine Waschmaschine bekannt. Die Anschlussvorrichtung enthält eine erste Verbindungseinrichtung, die in einer Öffnung einer Wand der Waschmaschine vormontierbar ist, und einen zweite Verbindungseinrichtung, die an einem Ende einer Wassereinleitungseinrichtung angeschlossen ist. Die beiden Verbindungsleitungen enthalten jeweils Hydraulikleitungen, die miteinander in geregelter Weise verbindbar sind. Die zweite Verbindungseinrichtung trägt einen Flansch, der mit Haltelaschen versehen ist, die diese Einrichtung an der Wand der Waschmaschinen festzulegen vermögen.

Aus der DE 196 20 422 A1 ist eine Vorrichtung zum Anschluss eines elektrischen Haushaltsgeräts, insbesondere einer Geschirrspülmaschinen oder einer Waschmaschine bekannt, die ein Magnetventil aufweist, das den Wasserzufluss zu unterbrechen vermag. Die Vorrichtung umfasst hierfür ein inneres Rohr für den Wasserstrom und ein äußeres, koaxial um das innere Rohr angeordnetes Rohr, so dass ein ringförmiger Hohlraum gebildet wird, in dem mindestens ein elektrisches Kabel zum Anschluss des Magnetventils an das elektrische Haushaltsgerät verläuft.

Aus der DE 197 15 828 A1 ist eine Sicherheitsvorrichtung gegen Überschwemmungen, insbesondere für Waschmaschinen bekannt. Die Vorrichtung besteht aus zwei oder mehreren, verschiedenen in Reihe geschalteten Modulen, wobei jeder dieser Module mindestens einen Teil der Leitung umfasst und wobei mindestens ein Ende eines Moduls Mittel für die Verbindung/Trennung mit einem Ende eines in der Reihe benachbarten Moduls und weitere Verbindung-/Trennungsmittel aufweist.

Aus der JP 02 128793 A ist eine Steuereinheit bekannt, die mit einer Waschmaschine in Wirkverbindung steht und dazu dient ein elektromagnetisch betätigbares Ventil anzusteuern.

Aus der DE 197 47 674 A1 ist ein wasserführendes Haushaltsgerät, wie eine Wasch- oder Geschirrspülmaschine bekannt, bei der die Wasseranschlussanordnung einen Abweisringkörper aufweist, der austretendes Leckwasser gezielt zur Auffangwanne im Bodenbereich des Gehäuses lenkt.

Aus der US-A-3,021,868 ist eine Ventil zum Mischen kalter und heißer Flüssigkeiten bekannt, das einen elektromagnetischen Antrieb aufweist und sich aufgrund seiner kompakten Bauweise zum Einbau in Waschmaschinen eignet.

Ferner ist aus der GB 992 447 A ein druckbetätigtes Mischventil, insbesondere für einen Einsatz in Haushaltsgeräten bekannt.

Aufgabe der vorliegenden Erfindung ist es, ein wasserführendes Haushaltgerät mit einer Anschlusstechnik für den Zulaufschlauch zur Zufuhr von Frischwasser aus der Hauswasserleitung und einen Zulaufschlauch bereitzustellen, die es ermöglicht die Kosten und die Fertigungstiefe bei der Herstellung zu reduzieren.

Diese Aufgabe wird durch die erfindungsgemäße Kombination mit den Merkmalen gemäß Anspruch 1 gelöst. Vorteilhafte Weiterbildungen der vorliegenden Erfindung sind in den Unteransprüchen gekennzeichnet.

Bei der erfindungsgemäßen Kombination, umfassend ein wasserführendes Haushaltsgerät, insbesondere Geschirrspülmaschine oder Waschmaschine, und eine Anschlussvorrichtung zur Aufnahme eines Zulaufschlauchs für die Zufuhr von Frischwasser in das wasserführende Haushaltsgerät, sind am wasserführenden Haushaltsgerät Mittel zur lösbaren elektrischen Kontaktierung wenigstens eines Einlassventils am Zulaufschlauch oder von Einrichtungen am Zulaufschlauch vorhanden. Damit kann sowohl ein Zulaufschlauch mit wenigstens einem Einlassventil und Mitteln zur lösbaren elektrischen Kontaktierung an das Haushaltsgerät als auch ein Zulaufschlauch ohne Einlassventil und ohne diese Mittel nach der Endmontage des Haushaltsgeräts, z. B. vom Benutzer bei der Montage des Haushaltsgeräts im Haushalt, angeschlossen werden, ohne dass werksseitig bei der Herstellung des Haushaltsgerätes unterschieden werden muss. Die entsprechenden Zulaufschläuche für die jeweiligen Länder brauchen den Haushaltgeräten nur noch beigegeben werden. Dabei sind die Mittel elektrische Kontakte an der Anschlussvorrichtung oder separate elektrische Steckverbinder mit elektrischen Kontakten. Damit kann der elektrische Kontakt besonders einfach und zuverlässig hergestellt werden. Außerdem sind die Kosten gering, weil hierzu als Kontaktflächen kleine metallische Plättchen ausreichen. Zweckmäßigerweise sind die elektrischen Kontaktflächen als federnd gelagerte Schleifkontakte ausgebildet.

In einer weiteren Ausführungsform ist an der Anschlussvorrichtung wenigstens eine elektrische Kontaktfläche und am Zulaufschlauch oder einer Gegenanschlussvorrichtung wenigstens eine elektrische Kontaktfläche derart angeordnet, dass in der Verbindungsposition des Zulaufschlauchs oder der Gegenanschlussvorrichtung an der Anschlussvorrichtung ein elektrischer Kontakt zwischen den elektrischen Kontaktflächen hergestellt ist, und die elektrischen Kontaktflächen jeweils mit elektrischen Leitungen zur Steuerung wenigstens eines Einlassventils verbunden sind. Damit braucht nur der Zulaufschlauch mit vorzugsweise Gegenanschlussvorrichtung an der Anschlussvorrichtung am Haushaltsgerät angeschlossen werden, ohne dass zusätzliche Einrichtungen, z. B. ein Steckverbinder und ein Gegensteckverbinder, zur Herstellung eines elektrischen Kontaktes gesteckt werden müssen.

In einer weiteren Ausführungsform ist aufgrund der Anordnung der elektrischen Kontaktflächen an der Anschlussvorrichtung der korrekte, insbesondere wasserdichte, Anschluss des Zulaufschlauches bzw. der Gegenanschlussvorrichtung an der Anschlussvorrichtung feststellbar und wird vorzugsweise an die Programmsteuerung gemeldet. Damit kann von der Programmsteuerung vorteilhafterweise festgestellt werden, ob ein korrekter Anschluss des Zulaufschlauches bzw. der Gegenanschlussvorrichtung an der Anschlussvorrichtung vorhanden ist und bei einem Fehler z. B. eine Störungsmeldung, optisch und/oder akustisch erfolgt und außerdem aufgrund der Störung der Betrieb des wasserführenden Haushaltsgeräts nicht gestartet wird.

Vorteilhafterweise ist außerhalb des Zulaufschlauches konzentrisch ein Hüllschlauch angeordnet. Damit kann auch eine Undichtigkeit im Zulaufschlauch detektiert werden sowie elektrische Leitungen im Zwischenraum zwischen Zulauf- und Hüllschlauch verlegt werden, so dass diese nicht sichtbar und vor Beschädigungen geschützt sind.

Ergänzend sind die elektrischen Leitungen zur Steuerung des wenigstens einen Einlassventils im Zulaufschlauch integriert sind, vorzugsweise zwischen Zulaufschlauch und Hüllschlauch.

In einer weiteren Ausführungsform ist die Anschlussvorrichtung als vorzugsweise symmetrischer Bajonettverschluss, Gewindeverbindung, einfacher Anschlussstutzen oder Kupplungsverbindung ausgebildet ist. Ein Bajonettverschluss bietet den Vorteil, dass dieser sehr einfach zu bedienen ist, weil z. B. keine bestimmten Anschraubdrehmomente notwendig sind und außerdem durch die elektrischen Kontakte sehr einfach der korrekte Anschluss des Zulaufschlauches bzw. der Gegenanschlussvorrichtung an der Anschlussvorrichtung feststellbar ist, da ein Bajonettverschluss nur in einer bestimmten Stellung seinen korrekten Sitz hat.

Vorzugsweise sind am Zulaufschlauch eine Gegenanschlussvorrichtung zum Anschluss des Zulaufschlauches an der Anschlussvorrichtung und/oder eine Schraubverbindung zum Anschluss des Zulaufschlauches an die Hauswasserinstallation ausgebildet.

In einer zusätzlichen Ausführungsform umfasst die Anschlussvorrichtung eine Reglerscheibe, die den maximalen Durchfluss beim Zulauf von Frischwasser aus der Hauswasserleitung begrenzt bzw. steuert.

Ergänzend umfasst die Anschlussvorrichtung und/oder der Anschluss des Zulaufschlauchs eine Dichtung zum Abdichten der Verbindung zwischen der Anschlussvorrichtung und dem Zulaufschlauch bzw. der Gegenanschlussvorrichtung.

Damit kann auf einfache und zuverlässige Weise eine wasserdichte Verbindung hergestellt werden.

Vorzugsweise umfasst die Anschlussvorrichtung eine Filtereinheit zum Rückhalt von im Frischwasser vorhandener Verschmutzungen.

Ergänzend weist der Zulaufschlauch und/oder die Gegenanschlussvorrichtung und/oder die Schraubverbindung an der Installationsseite wenigstens ein vorzugsweise elektromagnetisches Einlassventil auf, das den Zulauf von Frischwasser aus einer Hauswasserleitung steuert und vorzugsweise als Leckageschließventil bei einer Leckage schließt. Bei einer Anordnung des wenigstens einen Einlassventils an der Schraubverbindung, d. h. an der Installationsseite, kann das wenigstens eine Einlassventil auch dazu dienen, eine Schaden durch eine Leckage im Zulaufschlauch zu verhindern, weil bei einem Schließen des dort angeordneten Einlassventils die Wasserzufuhr zum Zulaufschlauch unterbrochen ist.

In einem Zulaufschlauch für ein wasserführendes Haushaltsgerät mit wenigstens einem Einlassventil sind Mittel zur lösbaren elektrischen Kontaktierung wenigstens eines Einlassventils am Zulaufschlauch oder an Einrichtungen am Zulaufschlauch mit dem Haushaltsgerät vorhanden. Damit kann ein elektrischer Kontakt zwischen dem Zulaufschlauch und dem dort angeordneten wenigsten einem Einlassventil und dem wasserführenden Haushaltsgerät hergestellt werden. Der Zulaufschlauch ist damit zu geeignet, trotz einer lösbaren Verbindung mit dem Haushaltsgerät, durch ein Schließen des wenigstens einen Einlassventils die Wasserzufuhr in den Zulaufschlauch zu unterbrechen und damit bei einer Leckage des Zulaufschlauches einen Schaden zu verhindern.

Vorzugsweise ist außerhalb des Zulaufschlauches konzentrisch ein Hüllschlauch angeordnet. Dadurch kann auf einfache Weise eine Undichtigkeit im Zulaufschlauch erkannt bzw. detektiert werden.

In einer vorteilhaften Ausführungsform sind am Zulaufschlauch eine Gegenanschlussvorrichtung zum Anschluss des Zulaufschlauches an eine Anschlussvorrichtung am Haushaltsgerät und/oder eine Schraubverbindung zum Anschluss des Zulaufschlauches an einer Hauswasserinstallation ausgebildet. Damit kann der Zulaufschlauch auf besonders einfache Weise, z. B. auch von einem Benutzer des Haushaltsgerätes, an das wasserführende Haushaltsgerät und an die Hauswasserinstallation angeschlossen werden.

Zweckmäßigerweise sind die Mittel elektrische Kontakte an der Gegenanschlussvorrichtung oder elektrische Kontakte in separaten Gegensteckverbindern zum Anschluss an Steckverbindern im Haushaltsgerät.

Im Folgenden wird die vorliegende Erfindung unter Bezugnahme auf die beigefügten Zeichnungen anhand eines bevorzugten Ausführungsbeispiels näher erläutert. Es zeigen:
- Figur 1: eine Schnittdarstellung durch eine Anschlussvorrichtung zur Aufnahme eines Zulaufschlauchs für die Zufuhr von Frischwasser aus einer Hauswasserleitung in ein wasserführendes Haushaltsgerät gemäß einer bevorzugten Ausführungsform der vorliegenden Erfindung;
- Figur 2: eine Schnittdarstellung durch eine am Zulaufschlauch angeordnete, ein Einlassventil umfassende Gegenanschlussvorrichtung, die an die in Figur 1 dargestellte Anschlussvorrichtung anschließbar ist;
- Figur 3: eine Schnittdarstellung durch die in Figur 1 dargestellte Anschlussvorrichtung in der Verbindungsposition mit einer Gegenanschlussvorrichtung (ohne Einlassventil) an einem Zulaufschlauch, der alternativ eine Schraubverbindung mit einem oder zwei Einlassventilen aufweist.

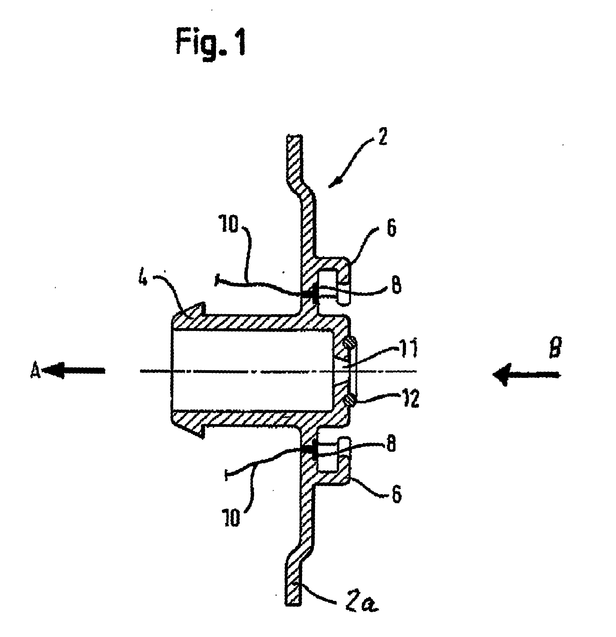

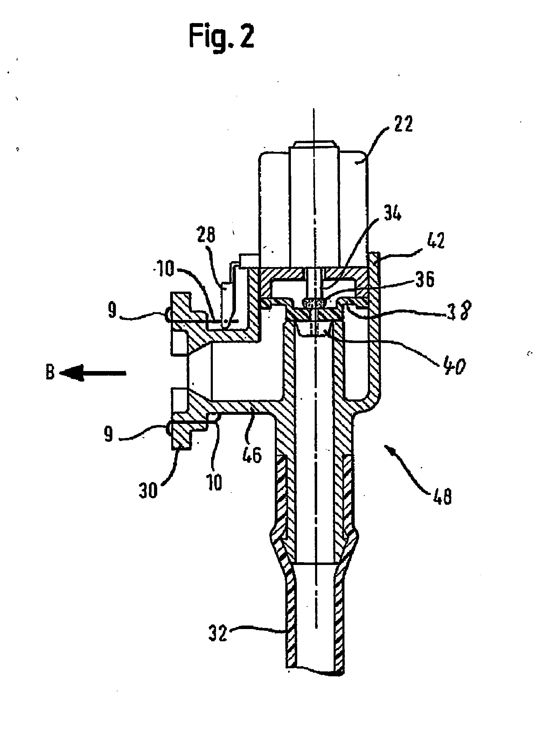

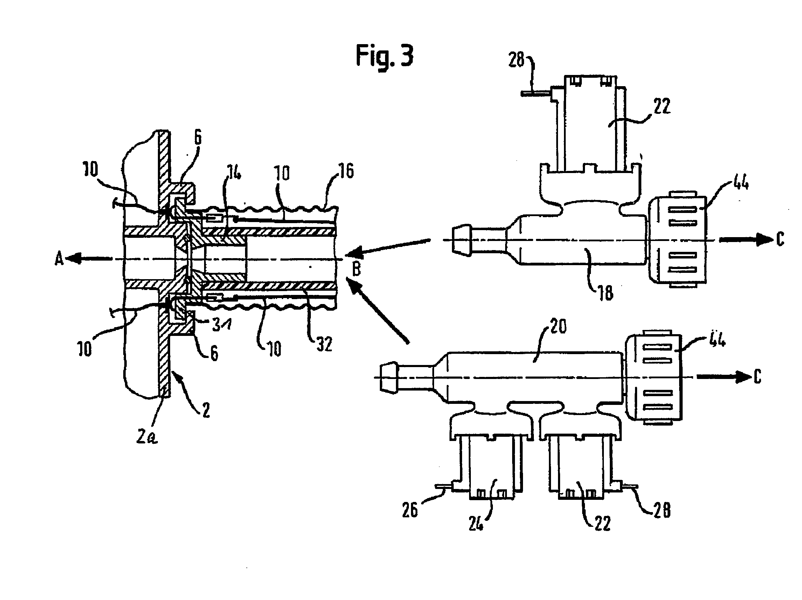

Die in Figur 1 dargestellte Anschlussvorrichtung dient der Aufnahme einer in Figur 2 und 3 gezeigten Gegenanschlussvorrichtung 48 bzw. Stutzen 14 mit einem Zulaufschlauch 32 für die Zufuhr von Frischwasser aus einer Hauswasserleitung in das wasserführende Haushaltsgerät, insbesondere eine Geschirrspülmaschine oder eine Waschmaschine (nicht gezeigt) gemäß einer bevorzugten Ausführungsform der vorliegenden Erfindung. Die Anschlussvorrichtung 2 ist vorzugsweise an einer Rückwand in der Bodenwanne des Haushaltsgeräts angeordnet, so dass die Gegenanschlussvorrichtung 48 mit dem Zulaufschlauch 32 über die Rückwand des Haushaltsgeräts mit der Anschlussvorrichtung 2 verbunden werden kann. Die Anschlussvorrichtung 2 weist eine verdrehsichere Schnellkupplung auf, die als Bajonettverschluss ausgebildet ist. Dazu ist an einer Halteplatte 2a der Anschlussvorrichtung 2 ein Kragen 6 ausgebildet, der in Verbindungsposition von einem in Figur 2 gezeigten komplementär ausgebildeten Kragen 30 an der Gegenanschlussvorrichtung 48 hintergriffen wird. Damit wird der Zulaufschlauch 32 an die Anschlussvorrichtung 2 gekoppelt. Aufgrund der verdrehsicheren Eigenschaft der Schnellkupplung 6, 30 bleibt die Verbindung zwischen dem Zulaufschlauch 32 und dem Haushaltsgerät in jeder Lage des Zulaufschlauchs 32 wasserdicht.

Der Zulaufschlauch 32 ist an seinem anderen Ende beispielsweise über eine Schraubverbindung mit einer Hauswasserleitung (nicht gezeigt) verbunden. Über einen Stutzen 4 der Anschlussvorrichtung 2 und eine daran angeschlossene Wasserleitung wird das vom Zulaufschlauch zugeführte Frischwasser aus der Hauswasserleitung in Richtung des Pfeils A an die hydraulischen Komponenten des wasserführenden Haushaltsgeräts weitergeleitet. Die Anschlussvorrichtung 2 umfasst eine Reglerscheibe 11, die den maximalen Durchfluss beim Zulauf von Frischwasser aus der Hauswasserleitung begrenzt. Ferner weist die Anschlussvorrichtung 2 eine Dichtung 12 zum Abdichten der Schnellkupplungsverbindung zwischen der Anschlussvorrichtung 2 und der Gegenanschlussvorrichtung 48 am Zulaufschlauch 32 auf.

Die Anschlussvorrichtung 2 ist mit elektrischen Kontakten 8 ausgestattet, die in der dargestellten Ausführungsform am Kragen 6 der Schnellkupplung ausgebildet sind. Die elektrischen Kontakte dienen der Kontaktierung von elektrischen Leitungen 10 für eine elektronische Programmsteuerung des Haushaltsgeräts, die zur Steuerung wenigstens eines am Zulaufschlauch 32 angeordneten Einlassventils 22, 24 dienen. Dadurch erfolgt der elektrische Kontakt zwischen der Programmsteuerung des Haushaltsgeräts und dem wenigstens einen Einlassventil 22, 24 automatisch bei Herstellung der Verbindung des Zulaufschlauchs 32 bzw. der Gegenanschlussvorrichtung 48 mit der Anschlussvorrichtung 2 am Haushaltsgerät über die Schnellkupplung 6, 30. Durch die elektrische Kontaktierung in der Schnellkupplung 6, 30 kann auch der korrekte Anschluss des Zulaufschlauchs 32 an das Haushaltsgerät überprüft werden, indem ein elektrischer Kontakt nur dann hergestellt wird, wenn der Zulaufschlauch 32 über die Schnellkupplung 6, 30 der Anschlussvorrichtung 2 bzw. Gegenanschlussvorrichtung 48 korrekt angeschlossen ist.

Figur 2 zeigt eine Schnittdarstellung durch eine am Zulaufschlauch 32 angeordnete Gegenanschlussvorrichtung 48 mit einem elektromagnetischen Einlassventil 22, wobei die Gegenanschlussvorrichtung 48 an die in Figur 1 dargestellte Anschlussvorrichtung 2 in Richtung des Pfeils B anschließbar ist. Die Gegenanschlussvorrichtung 48 weist eine Stutzen 46 auf, an dem ein Kragen 30 ausgebildet ist, der den Kragen 6 an der Anschlussvorrichtung 2 in der Verbindungsposition hintergreift, um die Gegenanschlussvorrichtung 48 im Bajonettverschluss mit der Anschlussvorrichtung 2 zu verbinden. Zur Herstellung eines elektrischen Kontaktes zwischen der Programmsteuerung (nicht gezeigt) und dem am der Gegenanschlussvorrichtung 48 angeordneten Einlassventil 22 über Leitungen 10 sind am Kragen 30 der Gegenanschlussvorrichtung 48 elektrische Kontaktflächen 9 angeordnet, die mit den am Kragen 6 der Anschlussvorrichtung 2 ausgebildeten Kontaktflächen 8 derart zusammenwirken, dass in der Verbindungsposition der Gegenanschlussvorrichtung 48 mit der Anschlussvorrichtung 2 zwischen den Kontaktflächen 8 und 9 ein elektrischer Kontakt hergestellt ist. Die elektrischen Kontaktflächen 8, 9 sind als federnd gelagerte Schleifkontakte ausgebildet sind, um einen zuverlässigen und flexiblen elektrischen Kontakt zu gewährleisten. Bei der in Figur 2 gezeigten Gegenanschlussvorrichtung 48 führen die Leitungen 10 von der Programmsteuerung des wasserführenden Haushaltsgeräts zu einer Steuerung 28 des Einlassventils 22, die vorzugsweise als Spulenkontakt mit Schneid/Klemmtechnik ausgeführt ist.

An die Gegenanschlussvorrichtung 48 ist der Zulaufschlauch 32 angeschlossen, der zur Hauswasserleitung (nicht gezeigt) führt. Das Einlassventil 22 ist somit zwischen dem Kragen 30 der Anschlussvorrichtung 2 und dem Zulaufschlauch 32 angeordnet und kann die Zufuhr von Frischwasser aus der Hauswasserleitung in das wasserführende Haushaltsgerät öffnen und schließen sowie vorzugsweise mit einem gedrosselten Durchfluss steuern. Das elektromagnetische Einlassventil 22 ist vorzugsweise wenigstens teilweise in einem Gehäuse 42 untergebracht und weist einen Stößel 34, eine Dichtung 36 sowie einen Einführkegel 38 auf, der zur Regelung der Durchflussmenge in den Fließweg des Einlassventils 22 einführbar ist. Ferner umfasst das Einlassventil 22 eine Dichtung zur Belüftung, um gegebenenfalls eine Beeinträchtigung der Funktion des Einlassventils 22 durch einen im Zulaufschlauch 32 entstehenden Unterdruck zu verhindern.

Figur 3 zeigt eine Schnittdarstellung durch die in Figur 1 dargestellte Anschlussvorrichtung 2 in der Verbindungsposition mit einer alternativen Ausführungsform einer Gegenanschlussvorrichtung 48 mit einem Zulaufschlauchs 32, jedoch ohne Einlassventil 22. Bei den in Figur 3 dargestellten Ausführungsformen verfügt der Zulaufschlauchs 32 über einen zusätzlichen, konzentrisch angeordneten Hüllschlauch 16. Dabei ist der Hüllschlauch 16 an seinem zur Anschlussvorrichtung 2 gerichteten Ende, d. h. geräteseitig, mit einem Stutzen 14 versehen, der wiederum einen Kragen 31 aufweist, der mit dem komplementär ausgebildeten Kragen 6 an der Anschlussvorrichtung 2 in der Verbindungsposition derart zusammenwirkt, so dass der Zulaufschlauch 32 und der Hüllschlauch 16 im Bajonettverschluss an die Anschlussvorrichtung 2 gekoppelt wird. Neben dem hier beschriebenen Bajonettverschluss sind beliebig andere Anschlussmechanismen möglich, z. B. eine Gewindeverbindung, ein einfacher Anschlussstutzen mit einer Schlauchklemme oder eine Kupplungsverbindung. Die elektrische Kontaktierung erfolgt gegebenenfalls über leicht lösbare Steck- und Gegensteckverbinder.

An dem gegenüberliegenden Ende, d. h. an der Installationsseite, ist an den Zulaufschlauche 32 mit dem Hüllschlauch 16 über eine Stutzenverbindung in Richtung der Pfeile B entweder die Ventileinheit 18 mit einem elektromagnetischen Einlassventil 22 oder die Ventileinheit 20 mit zwei elektromagnetischen Einlassventilen 22, 24 gekoppelt. Die Ventileinheiten 18, 20 sind jeweils auf ihrer der Anschlussvorrichtung 2 gegenüberliegenden Seite in Richtung der Pfeile C an die Hauswasserleitung (nicht gezeigt) über eine Schraubverbindung 44 angeschlossen. Die Verbindung der Ventileinheiten 18, 20 an die Hauswasserleitung kann dabei entweder direkt oder über eine weitere dazwischenliegende Schlauchverbindung erfolgen.

Zur Steuerung der Einlassventile 22, 24 sind jeweils elektrische Anschlüsse 26 und 28 vorgesehen, die mit den elektrischen Leitungen 10 zur elektronischen Programmsteuerung des wasserführenden Haushaltsgeräts verbunden sind. Die elektrischen Leitungen 10 sind im Hüllschlauch 16 integriert, wobei der elektrische Kontakt zwischen den Kontaktflächen 8, 9 über die Schnellkupplung 6, 30 in der oben beschriebenen Weise hergestellt wird. Dadurch entfällt die Notwendigkeit eines separaten Kabelstrangs der neben dem Zulaufschlauch 32 bzw. Hüllschlauch 16 verlegt und angeschlossen werden müsste, so dass eine Beschädigung des Kabelstrangs leicht vermieden werden kann.

Die Einlassventile 22, 24 dienen zur Steuerung der Wasserzufuhr in das wasserführende Haushaltsgerät für den Betrieb des Haushaltsgerät. Beispielsweise bei einer Geschirrspülmaschine wird die für einen Spülgang notwendige Wassermenge (Spülflotte) in den Spülbehälter eingelassen. Des Weiteren dienen die Einlassventile 22, 24 als Leckagesicherungsvorrichtungen. In einer Geschirrspülmaschine sind z. B. in der Bodenwanne unterhalb des Spülbehälters z. B. Schwimmerschalter und im Spülbehälter selbst Sensoren vorhanden, die einen fehlerhaften Wasserstand melden und damit ein Schließen der Einlassventile 22, 24 durch die vorzugsweise elektronische Programmsteuerung im Leckagefall bewirken. Es werden vorzugsweise zwei Einlassventile 22, 24 verwendet, um beim Ausfall eines Einlassventils 22, 24 im Schadensfall die Wasserzufuhr unterbrechen zu können, jedoch würde im Prinzip auch ein Einlassventil 22, 24 ausreichen.

Vorzugsweise ist ein Einlassventil 22, 24 am wasserführenden Haushaltsgerät im Strömungsrichtung nach der Anschlussvorrichtung 2, d. h. nicht entfernbar durch die Verbindung zwischen Anschlussvorrichtung 2 und Gegenanschlussvorrichtung 48, anordnet. Es können jedoch auch beide Einlassventile 22, 24 in obiger Weise entfernbar angeordnet sein, d. h. am Zulaufschlauch 32 oder an Einrichtungen 2, 18, 20, 44 am Zulaufschlauch 32, wie z. B. bei der Ventileinheit 20 mit zwei Einlassventilen 22, 24. Die Einlassventile 22, 24 werden vorzugsweise gleichzeitig, unabhängig von ihrer Position, angesteuert, d. h. geöffnet oder geschlossen.

In Ländern, in denen die Leckagesicherungsvorrichtung eine Leckage am Zulaufschlauch 32 erfasst, ist vorzugsweise ein zusätzlicher Hüllschlauch 16 um den Zulaufschlauch 32 angeordnet und die Ventileinheit 18, 20 mit einem oder zwei Einlassventilen 22, 24 an der Installationsseite des Zulaufschlauches 32 positioniert. Zwischen Zulaufschlauch 32 und dem Hüllschlauch 16 befinden sich Sensoren zur Wassererkennung (nicht gezeigt), um eine Leckage des Zulaufschlauches 32 erkennen zu können. Des Weiteren kann auch vorzugsweise der Zulaufschlauch 32 mit Hüllschlauch 16 in die Bodenwanne des Haushaltsgerätes münden, so dass das aus dem Zulaufschlauch 32 austretende Leckwasser in die Bodenwanne geleitet und dort gesammelt werden, so dass ein Schwimmerschalter in der Bodenwanne die Leckage registriert. Es kann auch ein Einlassventil 22, 24 an der Gegenanschlussvorrichtung 48 und ein Einlassventil 22, 24 an der Schraubverbindung 44 angeordnet sein.

Länder, bei denen die Leckagesicherungseinrichtung des wasserführenden Haushaltsgeräts den Zulaufschlauch 32 bei der Erfassung von Leckagen nicht mit einschließt (im Allgemeinen ohne Hüllschlauch), genügt es an der Gegenanschlussvorrichtung 48 ein Einlassventil 22, 24 einzubauen, wobei ergänzend im wasserführenden Haushaltsgerät ein Einlassventil 22, 24 vorhanden sein kann. Die Gegenanschlussvorrichtung 48 ist über einen Bajonettverschluss an der Anschlussvorrichtung 2 befestigt. Es kann auch in Strömungsrichtung entgegen der Anschlussvorrichtung 2 kein Einlassventil 22 angeordnet sein, falls in Strömungsrichtung nach der Anschlussvorrichtung 2 im wasserführenden Haushaltsgerät wenigstens ein Einlassventil 22, 24 angeordnet ist.

Aufgrund der Installation des Zulaufschlauchs 32 über die Schnellkupplung 6, 30 kann ein wasserführendes Haushaltsgerät auf einfache Weise auch nachträglich mit einem Zulaufschlauch mit beliebiger Ausstattung zur Berücksichtigung Kunden- oder länderspezifischer Sicherheitsanforderungen, z. B. mit oder ohne Leckschutz im Zulaufschlauch, ausgerüstet werden. Dadurch verringert sich die Fertigungstiefe bei der Herstellung wasserführender Haushaltsgeräte und die Anzahl unterschiedlicher Varianten des wasserführenden Haushaltsgeräts.

## Patentansprüche

1. Kombination, umfassend ein wasserführendes Haushaltsgerät, insbesondere Geschirrspülmaschine oder Waschmaschine, und eine Anschlussvorrichtung (2) zur Aufnahme eines Zulaufschlauchs (32) für die Zufuhr von Frischwasser in das wasserführende Haushaltsgerät, wobei am wasserführenden Hauhattsgerät Mittel (8) zur lösbaren elektrischen Kontaktierung wenigstens eines Einlassventils (22, 24) am Zulaufschlauch (32) oder von Einrichtungen (18, 20) am Zulaufschlauch (32) vorhanden sind, wobei die Mittel elektrische Kontakte (8) an der Anschlussvorrichtung (2) oder separate elektrische Steckverbinder mit elektrischen Kontakten (8) sind, **dadurch gekennzeichnet, dass** die elektrischen Kontaktflächen (8, 9) als federnd gelagerte Schleifkontakte ausgebildet sind.

2. Kombination nach Anspruch 1, **dadurch gekennzeichnet, dass** an der Anschlussvorrichtung (2) wenigstens eine elektrische Kontaktfläche (8) und am Zulaufschlauch (32) oder Gegenanschlussvorrichtung (14, 48) wenigstens eine elektrische Kontaktfläche (9) derart angeordnet ist, dass in der Verbindungsposition des Zulaufschlauchs (32) oder der Gegenanschlussvorrichtung (14, 48) an der Anschlussvorrichtung (2) ein elektrischer Kontakt zwischen den elektrischen Kontaktflächen (8, 9) hergestellt ist, und die elektrischen Kontaktflächen (8, 9) jeweils mit elektrischen Leitungen (10) zur Steuerung wenigstens eines Einlassventils (22, 24) verbunden sind.

3. Kombination nach Anspruch 2, **dadurch gekennzeichnet, dass** aufgrund der Anordnung der elektrischen Kontaktflächen (8) an der Anschlussvorrichtung (2) der korrekte, insbesondere wasserdichte, Anschluss des Zulaufschlauches (32) bzw. der Gegenanschlussvorrichtung (14, 48) an der Anschlussvorrichtung (2) feststellbar ist und vorzugsweise an die Programmsteuerung gemeldet wird.

4. Kombination nach einem der vorhergehenden Ansprüche, **dadurch gekennzeichnet, dass** außerhalb des Zulaufschlauches (32) konzentrisch ein Hüllschlauch (16) angeordnet ist.

5. Kombination nach Anspruch 5, **dadurch gekennzeichnet, dass** die elektrischen Leitungen (10) zur Steuerung des wenigstens einen Einlassventils (22, 24) im Zulaufschlauch (32) integriert sind, vorzugsweise zwischen Zulaufschlauch (32) und Hüllschlauch (16).

6. Kombination nach einem der vorhergehenden Ansprüche, **dadurch gekennzeichnet, dass** die Anschlussvorrichtung (2) als vorzugsweise symmetrischer Bajonettverschluss (6, 30), Gewindeverbindung, einfacher Anschlussstutzen oder Kupplungsverbindung ausgebildet ist.

7. Kombination nach einem der vorhergehenden Ansprüche, **dadurch gekennzeichnet, dass** am Zulaufschlauch (32) eine Gegenanschlussvorrichtung (14, 48) zum Anschluss des Zulaufschlauches (32) an der Anschlussvorrichtung (2) und/oder eine Schraubverbindung (44) zum Anschluss des Zulaufschlauches (32) an der Hauswasserinstallation ausgebildet sind.

8. Kombination nach einem der vorhergehenden Ansprüche, **dadurch gekennzeichnet, dass** die Anschlussvorrichtung (2) eine Reglerscheibe (11) umfasst, die den maximalen Durchfluss beim Zulauf von Frischwasser aus der Hauswasserleitung begrenzt bzw. steuert.

9. Kombination nach einem der vorangehenden Ansprüche, **dadurch gekennzeichnet, dass** die Anschlussvorrichtung (2) und/oder der Anschluss des Zulaufschlauchs (32) eine Dichtung (12) zum Abdichten der Verbindung zwischen der Anschlussvorrichtung (2) und dem Zulaufschlauch (32) bzw. der Gegenanschlussvorrichtung (14, 48) umfasst.

10. Kombination nach einem der vorangehenden Ansprüche, **dadurch gekennzeichnet, dass** die Anschlussvorrichtung (2) eine Filtereinheit zum Rückhalt von im Frischwasser vorhandener Verschmutzungen umfasst.

11. Kombination nach einem der vorangehenden Ansprüche, **dadurch gekennzeichnet, dass** der Zulaufschlauch (32) und/oder die Gegenanschlussvorrichtung (14, 48) und/oder die Schraubverbindung (44) wenigstens ein vorzugsweise elektromagnetisches Einlassventil (22, 24) aufweist, das den Zulauf von Frischwasser aus einer Hauswasserleitung steuert und vorzugsweise als Leckageschließventil bei einer Leckage schließt.

## Claims

1. Combination, comprising a water-conducting domestic appliance, particularly dishwashing machine or washing machine, and a connecting device (2) for reception of a feed hose (32) for the feed of fresh water to the water conducting domestic appliance, wherein means (8) for releasable electrical contact-making of at least one inlet valve (22, 24) at the feed hose (32) or of devices (18, 20) at the feed hose (32) are present at the water- conducting domestic appliance, wherein the means are electrical contacts (8) at the connecting device (2) or separate electrical plug connectors with electrical contacts (8), **characterised in that** the electrical contact surfaces (8, 9) are constructed as resiliently mounted sliding contacts.

2. Combination according to claim 1, **characterised in that** at least one electrical contact surface (8) is arranged at the connecting device (2) and at least one electrical contact surface (9) at the feed hose (32) or counter-connecting device (14, 48) in such a manner that in the connecting position of the feed hose (32) or the counter-connecting device (14, 48) with the connecting device (2) an electrical contact is produced between the electrical contact surfaces (8, 9) and the electrical contact surfaces (8, 9) are respectively connected with electrical lines (10) for control of at least one inlet valve (22, 24).

3. Combination according to claim 2, **characterised in that** the correct, in particular watertight, connection of the feed hose (32) or of the counter-connecting device (14, 48) with the connecting device (2) is detectable on the basis of the arrangement of the electrical contact surfaces (8) at the connecting device (2) and is preferably reported to the program control.

4. Combination according to one of the preceding claims, **characterised in that** an encasing hose (16) is concentrically arranged outside the feed hose (32).

5. Combination according to claim 4, **characterised in that** the electrical lines (10) for control of the at least one inlet valve (22, 24) are integrated in the feed hose (32), preferably between feed hose (32) and encasing hose (16).

6. Combination according to one of the preceding claims, **characterised in that** the connecting device (2) is constructed as a, preferably symmetrical, bayonet connection (6, 30), threaded connection, simple connecting stub pipe or coupling connection.

7. Combination according to one of the preceding claims, **characterised in that** a counter-connecting device (14, 48) for connection of the feed hose (32) with the connecting device (2) is formed at the feed hose (32) and/or a screw connection (44) for connection of the feed hose (32) with the domestic water installation is formed at the feed hose (32).

8. Combination according to one of the preceding claims, **characterised in that** the connecting device (2) comprises a regulating plate (11) which limits or controls the maximum throughflow in the case of feed of fresh water from the domestic water line.

9. Combination according to one of the preceding claims, **characterised in that** the connecting device (2) and/or the connection of the feed hose (32) comprises a seal (12) for sealing the connection between the connecting device (2) and the feed hose (32) or the counter-connecting device (14, 48).

10. Combination according to one of the preceding claims, **characterised in that** the connecting device (2) comprises a filter unit for restraining contaminants present in the fresh water.

11. Combination according to one of the preceding claims, **characterised in that** the feed hose (32) and/or the counter-connecting device (14, 48) and/or the screw connection (44) comprises at least one, preferably electromagnetic, inlet valve (22, 24) which controls the feed of fresh water from a domestic water line and preferably closes, as leakage closing valve, in the event of a leakage.

## Revendications

1. Combinaison comprenant un appareil ménager à circulation d'eau, en particulier un lave-vaisselle ou un lave-linge, et un dispositif de raccordement (2) destiné à recevoir un tuyau d'arrivée (32) pour l'alimentation de l'appareil ménager à circulation d'eau en eau propre, des moyens (8) pour établir un contact électrique amovible avec au moins une vanne d'admission (22, 24) sur le tuyau d'arrivée (32) ou des dispositifs (18, 20) sur le tuyau d'arrivée (32) étant présents sur l'appareil ménager à circulation d'eau, les moyens étant des contacts électriques (8) sur le dispositif de raccordement (2) ou des connecteurs électriques séparés avec des contacts électriques (8), **caractérisée en ce que** les surfaces de contact électriques (8, 9) se présentent sous la forme de contacts à frottement à logement élastique.

2. Combinaison selon la revendication 1, **caractérisée en ce qu'**au moins une surface de contact électrique (8) est située sur le dispositif de raccordement (2) et au moins une surface de contact électrique (9) est située sur le tuyau d'arrivée (32) ou le dispositif de raccordement complémentaire (14, 48) de manière telle que, dans la position de liaison entre le tuyau d'arrivée (32) ou du dispositif de raccordement complémentaire (14, 48) au dispositif de raccordement (2), un contact électrique est établi entre les surfaces de contact électrique (8, 9) et les surfaces de contact électrique (8, 9) sont respectivement reliées à des lignes électriques (10) pour commander au moins une vanne d'admission (22, 24).

3. Combinaison selon la revendication 2, **caractérisée en ce que**, en raison de la disposition des surfaces de contact électriques (8) sur le dispositif de raccordement (2), le raccordement correct, en particulier étanche à l'eau, du tuyau d'arrivée (32) resp. du dispositif de raccordement complémentaire (14, 48) au dispositif de raccordement (2) peut être constaté et est préférentiellement signalé à la commande par programme.

4. Combinaison selon l'une des revendications précédentes, **caractérisée en ce qu'**un tuyau enveloppant (16) est situé concentriquement à l'extérieur du tuyau d'arrivée (32).

5. Combinaison selon la revendication 5, **caractérisée en ce que** les conduites électriques (10) pour commander l'au moins une vanne d'admission (22, 24) sont intégrées dans le tuyau d'arrivée (32), de préférence entre le tuyau d'arrivée (32) et le tuyau enveloppant (16).

6. Combinaison selon l'une des revendications précédentes, **caractérisée en ce que** le dispositif de raccordement (2) se présente sous la forme d'une fermeture à baïonnette (6, 30) préférentiellement symétrique, d'une liaison filetée, d'un simple embout de raccordement ou d'une liaison par couplage.

7. Combinaison selon l'une des revendications précédentes, **caractérisée en ce que** sont réalisés, sur le tuyau d'arrivée (32), un dispositif de raccordement complémentaire (14, 48) pour le raccordement du tuyau d'arrivée (32) au dispositif de raccordement (2) et/ou un assemblage par vissage (44) pour le raccordement du tuyau d'arrivée (32) à l'installation d'eau domestique.

8. Combinaison selon l'une des revendications précédentes, **caractérisée en ce que** le dispositif de raccordement (2) comprend un disque de réglage (11) qui limite resp. commande le débit maximal à l'arrivée d'eau propre venant de la conduite d'eau domestique.

9. Combinaison selon l'une des revendications précédentes, **caractérisée en ce que** le dispositif de raccordement (2) et/ou le raccordement du tuyau d'arrivée (32) comprend un joint d'étanchéité (12) pour rendre étanche la liaison entre le dispositif de raccordement (2) et le tuyau d'arrivée (32) resp. le dispositif de raccordement complémentaire (14, 48).

10. Combinaison selon l'une des revendications précédentes, **caractérisée en ce que** le dispositif de raccordement (2) comprend une unité filtrante pour retenir des impuretés contenues dans l'eau propre.

11. Combinaison selon l'une des revendications précédentes, **caractérisée en ce que** le tuyau d'arrivée (32) et/ou le dispositif de raccordement complémentaire (14, 48) et/ou l'assemblage par vissage (44) comportent au moins une vanne d'admission (22, 24) préférentiellement électromagnétique qui commande l'arrivée d'eau propre venant d'une conduite d'eau domestique et, préférentiellement, en tant que vanne de fermeture en cas de fuite, se ferme en cas de fuite.
